# EUROPEAN PATENT APPLICATION

(11) **EP 2 639 249 A1**
(43) Date of publication of application: **18.09.2013**
(21) Application number: 11192170.6
(22) Date of filing: 06.12.2011
(51) Int. Cl.: C08G 18/09, C08G 18/10, C08G 18/22, C08G 18/32, C08G 18/48, C08G 18/66, C08G 18/79, C09D 175/04

(54) **Abrasion-resistant polyurethane coating**

(71) Applicant: BASF SE, 67056 Ludwigshafen (DE)
(72) Inventor: Thiel, Laurence, 60800 Crepy-en-Vaois (FR); Bouvier, Denis, F-38300 Bourgoin-Jallie (FR); Roux, Jean-Paul, 95170 Devil La Barre (FR); Vernet, Eric, 77100 Meaux (FR)

(57) **Abstract**

The present invention relates to a polyurethane coating having a hardness of 50 to 90 Shore A, obtainable by mixing (a) polyisocyanate having an average functionality of 2 to less than 2.5, (b) polymeric compounds having isocyanate-reactive groups, (c) catalysts, comprising trimerization catalyst, optionally (d) chain extenders, and (e) auxiliaries and/or additives to give a reaction mixture, applying the reaction mixture to an article, and curing the reaction mixture to give the polyurethane coating, the polyisocyanate component (a) and the components (b) to (e) being reacted in amounts such that the isocyanate index is 103 to 200. Further provided with the present invention are a process for producing an abrasion-resistant polyurethane coating, and a steering wheel comprising an abrasion-resistant polyurethane coating.

## Description

The present invention relates to a polyurethane coating having a hardness of 50 to 90 Shore A, obtainable by mixing (a) polyisocyanate having an average functionality of 2 to less than 2.5, (b) polymeric compounds having isocyanate-reactive groups, (c) catalysts, comprising trimerization catalyst, optionally (d) chain extenders, and (e) auxiliaries and/or additives to give a reaction mixture, applying the reaction mixture to an article, and curing the reaction mixture to give the polyurethane coating, the polyisocyanate component (a) and the components (b) to (e) being reacted in amounts such that the isocyanate index is 103 to 200. Further provided with the present invention are a process for producing an abrasion-resistant polyurethane coating, and a steering wheel comprising an abrasion-resistant polyurethane coating.

In order to enhance the surface of the polyurethane and in order to improve its resistance under, for example, mechanical load, UV radiation, hydrolysis, and exposure to solvents, basic polyurethane articles are frequently coated.

The coating of basic polyurethane articles may be accomplished, for example, after these components have been produced, by spray application of the coating material or by immersion of the basic polyurethane articles into the coating material. Also possible is the application of the coating film by means of what is known as "in mold coating". Here, a coating material is introduced into a mold, which is subsequently filled with the polyurethane reaction mixture. After the polyurethane reaction mixture has cured, the ready-coated polyurethane molding is removed from the mold.

One disadvantage of these techniques for applying a coating film to a basic polyurethane article is that each of the methods is highly complicated. For instance, when basic polyurethane articles are immersed into a bath of coating material, the desired, uniform coating film is obtained only when the basic polyurethane article is a small article of simple shape and is removed from the coating bath at a precisely controlled rate.

When the coating material is sprayed onto the basic polyurethane article or into the mold, paint spray is produced, which must not enter the environment. For this reason, coating work of this kind has to be carried out in special coating booths which are provided with filters for the outgoing air.

Disadvantages of known coated polyurethanes are diverse. For instance, these polyurethanes frequently have porous film surfaces which soil easily. The mechanical stability, as for example the adhesion or the elasticity, of the coating materials is inadequate, particularly for automotive applications. Further, the resistance of the coating materials towards solvents is frequently poor, and the UV stability of the coating systems is inadequate, particularly for applications in the automotive segment. Coated polyurethanes are described in, for example, "Kunststoffhandbuch", volume 7, "Polyurethane", Carl Hanser Verlag, 2nd edition, 1983, section 7.3.3.5.

Steering wheels, in the automobile sector, for example, are produced typically as integral polyurethane foams. In this case, in appropriately equipped foaming molds, first a release agent and then an aliphatic protective coating material are introduced, after which a skeleton of injection-cast lightweight metal is inserted, followed by the injection of a PU R foam system, which foams around the metal insert and enters in an inseparable bond with the film of coating material.

The PUR integral foam system for steering wheels generally has a mold-foamed density of 300 to 450 kg/m³ and has a lightweight integral structure, i.e., the layer facing the coating material has a higher density than the foam core on the insert.

It is a disadvantage of the state of the art that a soft touch and abrasion resistance often can not be obtained at the same time. In addition especially thin coatings of the state of the art tend to delaminate, especially when they have been coated onto a soft material.

It was an object of the present invention to provide an abrasion-resistant polyurethane coating system which allows a coating step to be dispensed with. It is further object of the invention to provide an abrasion resistant polyurethane coating with a hardness of 50 to 90 shore A which can be applied in automotive applications as steering wheels. Further it was object of the present invention to provide articles having a soft touch and a high abrasion resistance.

This object is achieved by means of a polyurethane coating having a hardness of 50 to 90 Shore A, obtainable by mixing (a) polyisocyanate having an average functionality of 2 to less than 2.5, (b) polymeric compounds having isocyanate-reactive groups, (c) catalysts, comprising trimerization catalyst, optionally (d) chain extenders, and (e) auxiliaries and/or additives to give a reaction mixture, applying the reaction mixture to an article, and curing the reaction mixture to give the polyurethane coating, the polyisocyanate component (a) and the components (b) to (e) being reacted in amounts such that the isocyanate index is 103 to 200.

A polyurethane coating in this context is understood to be a substantially compact polyurethane which has been applied to a support. The support in this case may be any material, such as metal or plastic material like a thermoplastic material. As the support it is preferred to use a plastic, more preferably a plastic based on polyurethane, and more particularly a polyurethane foam.

A substantially compact polyurethane is a polyurethane which is approximately free from gas inclusions. The density of a compact polyurethane is preferably greater than 0.8 g/cm³, more preferably greater than 0.9 g/cm³, and more particularly greater than 1.0 g/cm³. Polyurethanes having a density of less than 0.8 g/cm³ are referred to in the context of the invention as polyurethane foams.

The polyurethane coating of the invention has a hardness of 50 to 90 Shore A, preferably of 75 to 85 Shore A, and more preferably of 78 to 82 Shore A.

The polyurethane coating according to the present invention shows a high abrasion resistance. In the sense of the invention an abrasion resistant polyurethane means a polyurethane which has an increased resistance toward material wear by abrasion. Typically abrasion can occur when an article is touched repeatedly at the same place. This kind of abrasion can be simulated by rubbing an article to be tested with a cloth. Such a test mode is disclosed in detail with the examples.

The polyisocyanates (a) present in the polyisocyanurate system of the invention encompass all aromatic and aliphatic isocyanates having a functionality of 2 to less than 2.5 that are known for the preparation of polyurethanes. Examples are 2,2'-, 2,4'-, and 4,4'-diphenylmethane diisocyanate, the mixtures of monomeric diphenylmethane diisocyanates and higher polycyclic homologs of diphenylmethane diisocyanate (polymeric MDI), isophorone diisocyanate (IPDI) or its oligomers, 2,4- or 2,6-tolylene diisocyanate (TDI) or mixtures thereof, tetramethylene diisocyanate or its oligomers, hexamethylene diisocyanate (HDI) or its oligomers, naphthylene diisocyanate (NDI) or mixtures thereof, the average functionality of the polyisocyanates (a) being in each case less than 2.5.

As polyisocyanates (a) it is preferred to use monomeric diphenylmethane diisocyanate, as for example 2,2'-diphenylmethane diisocyanate, 2,4'-diphenylmethane diisocyanate, 4,4'-diphenylmethane diisocyanate or mixtures thereof, preferably 4,4'-diphenylmethane diisocyanate. Diphenylmethane diisocyanate here may also be used as a mixture with its derivatives. In this context, diphenylmethane diisocyanate may comprise with particular preference up to 10% by weight, with more particular preference up to 5% by weight, of carbodiimide-, uretdione-, allophanate- or uretonimine-modified diphenylmethane diisocyanate, more particularly carbodiimide-modified diphenylmethane diisocyanate.

Polyisocyanates (a) may also be used in the form of polyisocyanate prepolymers. These polyisocyanate prepolymers are obtainable by reacting above-described polyisocyanates (constituent (a-1)) in excess, at temperatures for example of 30 to 100°C, preferably at about 80°C, with polyols (constituent (a-2)), to form the prepolymer. The NCO content of polyisocyanate prepolymers of the invention is preferably from 5% to 30 % by weight NCO, more preferably from 15% to 28 % by weight NCO and in particular 20 to 25 % by weight NCO.

Polyols (a-2) are known to the skilled person and are described in, for example, "Kunststoffhandbuch, 7, Polyurethane", Carl Hanser-Verlag, 3^{rd} edition 1993, section 3.1. Thus, for example, it is possible as polyols to use polyetherols or polyesterols, such as the polyols described under (b) below. As polyols (a-2) it is preferred to use polyols comprising secondary OH groups, such as polypropylene oxide, for example. These polyols (a-2) preferably possess a functionality of 2 to 4, more preferably of 2 to 3.

Optionally, chain extenders (a-3) may be added to the reaction to form the polyisocyanate prepolymer. Chain extenders (a-3) suitable for the prepolymer are dihydric or trihydric alcohols, examples being dipropylene glycol and/or tripropylene glycol, or the adducts of dipropylene glycol and/or tripropylene glycol with alkylene oxides, preferably dipropylene glycol.

Used with particular preference as polyisocyanate (a) is a polyisocyanate prepolymer based on monomeric 4,4'-diphenylmethane diisocyanate or on mixtures of 4,4'-diphenylmethane diisocyanate with its derivatives, more particularly 4,4'-diphenylmethane diisocyanate comprising up to about 10% by weight of carbodiimide-modified 4,4'-diphenylmethane diisocyanate, and polypropylene oxide having a functionality of 2 to 4, and also, optionally, dipropylene glycol.

The average functionality of the isocyanates (a) here is less than 2.5, preferably 1.8 to 2.2, and more preferably 1.95 to 2.1.

Polymeric compounds having isocyanate-reactive groups, b), have a number average molecular weight of greater than 400 g/mol, preferably greater than 550 g/mol, and may be, for example, polyetherols, polyesterols or polycarbonate-ols, the average functionality of the relatively high molecular weight compounds having groups that are reactive toward isocyanate groups being preferably less than 4.

Polyetherols are prepared by known processes, as for example by anionic polymerization with alkali metal hydroxides or alkali metal alkoxides as catalysts, and with addition of at least one starter molecule containing in bound form 2 to 3 hydrogen atoms that are reactive toward isocyanate groups, or by cationic polymerization with Lewis acids, such as antimony pentachloride or boron fluoride-etherate, from one or more alkylene oxides having 2 to 4 carbon atoms in the alkylene radical. Suitable alkylene oxides are, for example, tetrahydrofuran, 1,3-propylene oxide, 1,2- and 2,3-butylene oxide, and, preferably ethylene oxide and 1,2-propylene oxide. In addition it is also possible as catalysts to use multimetal cyanide compounds, known as DMC catalysts. The alkylene oxides can be used individually, successively in alternation, or as mixtures. Preference is given to mixtures of 1,2-propylene oxide and ethylene oxide, the ethylene oxide being used in amounts of 10% to 50% as an ethylene oxide end block ("EO cap"), and so the resultant polyols have more than 70% of primary OH end groups.

Starter molecules contemplated include water and dihydric and trihydric alcohols, such as ethylene glycol, 1,2- and 1,3-propanediol, diethylene glycol, dipropylene glycol, 1,4-butanediol, glycerol or trimethylolpropane, preferably ethylene glycol, 1,2- and 1,3-propanediol, diethylene glycol, dipropylene glycol, tripropylene glycol, and 1,4-butanediol.

The polyether polyols, preferably polyoxypropylene-polyoxyethylene polyols, possess an average functionality of 1.7 to 4, more preferably of 1.8 to 3, and more particularly of 1.9 to 2.5, and molecular weights of 1000 to 12 000, preferably 1400 to 8000 g/mol, and more preferably 1700 to 6000 g/mol. As polyether polyols, use is made more particularly of those prepared by DMC catalysis starting from a difunctional starter.

As polyether polyols it is particularly preferred to use polytetrahydrofuran. The functionality here is typically from 1.8 to 3, preferably from 1.9 to 2.2, and more preferably 1.95 to 2.1, and the number-average molecular weight is typically 500 to 5000 g/mol, preferably 750 to 4000 g/mol, more preferably 800 to 2500 g/mol, and more particularly from 1500 to 2200 g/mol.

Polyester polyols may be prepared, for example, from organic dicarboxylic acids having 2 to 12 carbon atoms, preferably aliphatic dicarboxylic acids having 4 to 6 carbon atoms, and polyhydric alcohols, preferably diols, having 2 to 12 carbon atoms, preferably 2 to 6 carbon atoms. Examples of dicarboxylic acids contemplated include the following: succinic acid, glutaric acid, adipic acid, sorbic acid, azelaic acid, sebacic acid, decanedicarboxylic acid, maleic acid, fumaric acid, phthalic acid, isophthalic acid, and terephthalic acid. The dicarboxylic acids in this case may be used either individually or in a mixture with one another. In place of the free dicarboxylic acids it is also possible to use the corresponding dicarboxylic acid derivatives, such as, for example, dicarboxylic esters of alcohols having 1 to 4 carbon atoms, or dicarboxylic anhydrides. Preference is given to using dicarboxylic acid mixtures of succinic, glutaric, and adipic acids in proportions of, for example, 20 to 35 : 35 to 50 : 20 to 32 parts by weight, and more particularly adipic acid. Examples of dihydric and polyhydric alcohols, more particularly diols, are as follows: ethanediol, diethylene glycol, 1,2- and 1,3-propanediol, dipropylene glycol, 1,4-butanediol, 1,5-pentanediol, 1,6-hexanediol, 1,10-decanediol, glycerol and trimethylolpropane. Preference is given to using ethanediol, diethylene glycol, 1,4-butanediol, 1,5-pentanediol, and 1,6-hexanediol. It is additionally possible to use polyester polyols formed from lactones, e.g. ε-caprolactone, or hydroxycarboxylic acids, e.g. ω-hydroxycaproic acid.

For preparing the polyester polyols it is possible to carry out polycondensation of the organic, e.g., aromatic and preferably aliphatic polycarboxylic acids and/or their derivatives and polyhydric alcohols without catalyst or, preferably, in the presence of esterification catalysts, appropriately in an atmosphere of inert gas, such as, for example, nitrogen, carbon monoxide, helium, argon, etc., in the melt at temperatures of 150 to 250°C, preferably 180 to 220°C, optionally under reduced pressure, until the desired acid number is reached, this number being preferably less than 10, more preferably less than 2. According to one preferred embodiment, the esterification mixture is polycondensed at the aforementioned temperatures until an acid number is reached of 80 to 30, preferably 40 to 30, under atmospheric pressure and is then polycondensed under a pressure of less than 500 mbar, preferably 50 to 150 mbar. Examples of esterification catalysts that are contemplated include iron, cadmium, cobalt, lead, zinc, antimony, magnesium, titanium, and tin catalysts in the form of metals, metal oxides or metal salts. The polycondensation may be carried out alternatively in liquid phase in the presence of diluents and/or azeotrope formers, such as benzene, toluene, xylene or chlorobenzene, for example, for the distillative azeotropic removal of the water of condensation. For preparing the polyester polyols, the organic polycarboxylic acids and/or their derivatives and polyhydric alcohols are polycondensed advantageously in a molar ratio of 1 : 1 to 1.8, preferably 1 : 1.05 to 1.2.

The polyester polyols obtained preferably possess a functionality of 1.8 to 4, more preferably of 1.9 to 3, and more particularly of 2.0 to 2.5, and a molecular weight of 480 to 5000, preferably 1000 to 4500 g/mol, and more particularly 1600 to 4500.

The average functionality of the polymeric compounds having isocyanate-reactive groups, (b), is preferably 1.8 to 3.0, more preferably 1.9 to 2.5, and more particularly 1.95 to 2.2. The fraction of relatively high molecular weight compounds having precisely two groups that are reactive toward isocyanate groups, known as diols, relative to the total weight of the polymeric compounds having isocyanate-reactive groups, b), is greater than 50% by weight, more preferably greater than 80% by weight, and more particularly 100% by weight.

As polymeric compounds having isocyanate-reactive groups, b), it is preferred to use polytetrahydrofuran, more preferably exclusively polytetrahydrofuran.

As catalysts (c) it is possible to use all known polyurethane catalysts which comprise a trimerization catalyst. A trimerization catalyst is distinguished by the fact that it catalyzes the trimerization reaction of the NCO groups with one another. Examples that may be mentioned include metal salts, especially ammonium, alkali metal or alkaline earth metal salts of carboxylic acids. Preference here is given to using the salts of linear or branched-chain, substituted or unsubstituted, saturated or unsaturated aliphatic or aromatic carboxylic acids having 1 to 20 carbon atoms, such as, for example, formic acid, acetic acid, octanoic acid, tartaric acid, citric acid, oleic acid, stearic acid, and ricinoleic acid, or substituted or unsubstituted aromatic carboxylic acids having 6 to 20 carbon atoms, such as benzoic acid and salicylic acid.

As trimerization catalysts it is particularly preferred to use potassium formate, potassium acetate, potassium octoate, ammonium formate, ammonium acetate, and ammonium octoate, more particularly potassium acetate.

Besides the trimerization catalysts, further catalysts customary for the preparation of the polyurethanes may be used. As catalyst (c), in addition to potassium acetate, it is additionally possible to use all catalysts that are customary for polyurethane preparation. Such catalysts are described in, for example, "Kunststoffhandbuch, volume 7, Polyurethane", Carl Hanser Verlag, 3rd edition 1993, section 3.4.1. Examples of those contemplated include organometallic compounds, preferably organotin compounds, such as tin(II) salts of organic carboxylic acids, e.g., tin(II) acetate, tin(II) octoate, tin(II) ethylhexoate, and tin(II) laurate, and the dialkyltin(IV) salts of organic carboxylic acids, e.g., dibutyltin diacetate, dibutyltin dilaurate, dibutyltin maleate, and dioctyltin diacetate, and also bismuth carboxylates, such as bismuth(III) neodecanoate, bismuth 2-ethylhexanoate, and bismuth octanoate, or mixtures. Further possible catalysts are strongly basic amine catalysts. Examples of these are amidines, such as 2,3-dimethyl-3,4,5,6-tetrahydropyrimidine, tertiary amines, such as triethylamine, tributylamine, dimethylbenzylamine, N-methyl-, N-ethyl-, and N-cyclohexylmorpholine, N,N,N',N'-tetramethylethylenediamine, N,N,N',N'-tetramethylbutanediamine, N,N,N',N'-tetramethylhexanediamine, pentamethyldiethylenetriamine, tetramethyldiaminoethyl ether, bis(dimethylaminopropyl)urea, dimethylpiperazine, 1,2-dimethylimidazole, 1-azabicyclo[3.3.0]octane, and, preferably, 1,4-di-azabicyclo[2.2.2]octane, and alkanolamine compounds, such as triethanolamine, triisopropanolamine, N-methyl- and N-ethyl-diethanolamine, and dimethylethanolamine. The catalysts may used individually or as mixtures.

Other compounds contemplated as catalysts include the following: tris(dialkylaminoalkyl)-s-hexahydrotriazines, preferably tris(N,N-dimethylaminopropyl)-s-hexahydrotriazine, tetraalkylammonium hydroxides, such as tetramethylammonium hydroxide, alkali metal hydroxides, such as sodium hydroxide, and alkali metal alkoxides, such as sodium methoxide and potassium isopropoxide, and also alkali metal salts of long-chain fatty acids having 8 to 20 C atoms and optionally pendant hydroxyl groups.

The fraction of trimerization catalyst is preferably at least 50% by weight, more preferably 55 to 80 % by weight, very preferably 60 to 70% by weight, based on the total weight of the catalyst (c). Preferably the remainder is an amine based catalyst, wherein 1,4-diazabicyclo[2.2.2]octane is especially preferred.

The catalysts (c) can be used, for example, in a concentration of 0.001 to 5% by weight, more particularly 0.05% to 2% by weight, as catalyst or as catalyst combination, based on the weight of the component (b).

As chain extenders (d), use is made of substances having a molecular weight of preferably less than 400 g/mol, more preferably from 60 to 350 g/mol, the chain extenders having two isocyanate-reactive hydrogen atoms. They may be used preferably individually or in the form of mixtures. Preference is given to using diols having molecular weights of less than 400, more preferably of 60 to 300, and more particularly 60 to 150. Examples of those contemplated include aliphatic, cycloaliphatic and/or araliphatic diols having 2 to 14, preferably 2 to 10, carbon atoms, such as ethylene glycol, 1,3-propanediol, 1,10-decanediol, 1,2-, 1,3-, and 1,4-dihydroxycyclohexane, diethylene glycol, dipropylene glycol, and 1,4-butanediol, 1,6-hexanediol, and bis(2-hydroxyethyl)hydroquinone, and also low molecular weight, hydroxyl-containing polyalkylene oxides based on ethylene oxide and/or on 1,2-propylene oxide and on the aforementioned diols as starter molecules. Particularly preferred for use as chain extenders (d) are monoethylene glycol, 1,4-butanediol, diethylene glycol or mixtures thereof, more particularly 1,4-butanediol as sole chain extender.

Where chain extenders are used, they are appropriately employed in amounts of 1% to 40% by weight, preferably 1.5% to 20% by weight, and more particularly 2% to 10% by weight, based on the weight of the components b) and d).

Optionally, auxiliaries and/or additives (e) as well may additionally be added to the reaction mixture for producing the abrasion-resistant polyurethane coating. Examples include surface-active substances, further release agents, fillers, water-absorbing substances, dyes, pigments, hydrolysis inhibitors, odor absorbers, substances having a fungistatic and/or bacterostatic activity and/or UV-stabilizers

Examples of surface-active substances contemplated include compounds which serve to assist the homogenization of the starting materials and optionally are also suitable for regulating the cell structure. Examples include emulsifiers, such as the sodium salts of castor oil solvates or of fatty acids, and also salts of fatty acids with amines, e.g., diethylamine oleate, diethanolamine stearate, diethanolamine ricinolate, and salts of sulfonic acids, e.g., alkali metal salts or ammonium salts of dodecylbenzene- or dinaphthylmethanedisulfonic acid, and ricinoleic acid; siloxane-oxalkylene copolymers and other organopolysiloxanes, oxyethylated alkylphenols, oxyethylated fatty alcohols, liquid paraffins, castor oil esters or ricinoleic acid, turkey red oil and peanut oil, and paraffins, fatty alcohols, and dimethylpolysiloxanes. Suitable in addition for improving the emulsifying effect are oligomeric acrylates having polyoxyalkylene radicals and fluoroalkane radicals as side groups. The surface-active substances are used typically in amounts of 0.01 to 5 parts by weight, based on 100 parts by weight of the component b).

Suitable further release agents include the following, which are given by way of example: reaction products of fatty acid esters with polyisocyanates, salts of amino-containing polysiloxanes and fatty acids, salts of saturated or unsaturated (cyclo)aliphatic carboxylic acids having at least 8 C atoms and tertiary amines, and also, in particular, internal release agents, such as carboxylic esters and/or carboxamides, prepared by esterification or amidation of a mixture of montan acid and at least one aliphatic carboxylic acid having at least 10 C atoms, with at least difunctional alkanolamines, polyols and/or polyamines having molecular weights of 60 to 400 g/mol, as disclosed in EP 153 639, for example, mixtures of organic amines, metal salts of stearic acid, and organic monocarboxylic and/or dicarboxylic acids or their anhydrides, as described in DE-A-3 607 447, for example, or mixtures of an imino compound, the metal salt of a carboxylic acid, and optionally a carboxylic acid, as disclosed in US 4 764 537, for example. Reaction mixtures of the invention preferably comprise no further release agents.

As additives for water absorption it is preferred to use aluminosilicates selected from the group consisting of sodium aluminosilicates, potassium aluminosilicates, calcium aluminosilicates, cesium aluminosilicates, barium aluminosilicates, magnesium aluminosilicates, strontium aluminosilicates, sodium aluminophosphates, potassium aluminophosphates, calcium aluminophosphates, and mixtures thereof. Used with particular preference as carrier substance are mixtures of sodium, potassium, and calcium aluminosilicates in castor oil.

The additive for water absorption preferably has a number-average particle size of not greater than 200 µm, more preferably not greater than 150 µm, and more particularly not greater than 100 µm. The pore size of the additive of the invention for water absorption is preferably 2 to 5 angstroms.

If an additive for water absorption is added, this is done preferably in amounts greater than one part by weight, more preferably in the range from 1.2 to 2 parts by weight, based on the total weight of the abrasion-resistant polyurethane.

Fillers, more particularly reinforcing fillers, are understood to be the customary organic and inorganic fillers, reinforcing agents, weighting agents, coating agents, etc., that are known per se. Mention may be made specifically, by way of example, of the following: inorganic fillers, such as silicatic minerals, examples being phyoosilicates, such as antigorite, bentonite, serpentine, hornblends, amphibole, chrysotile, and talc, metal oxides, such as kaolin, aluminum oxides, titanium oxides, zinc oxide, and iron oxides, metal salts such as chalk and heavy spar, and inorganic pigments, such as cadmium sulfide, zinc sulfide, and also glass, etc. It is preferred to use kaolin (china clay), aluminum silicate, and coprecipitates of barium sulfate and aluminum silicate. Examples of organic fillers contemplated include the following: carbon black, melamine, rosin, cyclopentadienyl resins, and graft polymers, and also cellulose fibers, polyamide fibers, polyacrylonitrile fibers, polyurethane fibers, and polyester fibers on the basis of aromatic and/or aliphatic dicarboxylic esters, and especially carbon fibers.

The organic and inorganic fillers may be used individually or as mixtures and are added to the reaction mixture advantageously in amounts of 0.5% to 50% by weight, preferably 1 % to 40% by weight, based on the weight of components a) to d).

Examples for antioxidants and UV-stabilizers are stabilizers selected from the group, consisting of hindered phenols, for example Cyanox 1790 ® from Cytec Industries INC, HALS-stabilizers (hindered amine light stabilizer), triazines, benzophenones und benzotriazoles.

The abrasion-resistant polyurethane preferably has a textured surface. With particular preference the abrasion-resistant polyurethane has a grained surface modeled on leather. The thickness of the polyurethane coating is typically in the range from 0.1 to 20 mm, preferably from 0.5 to 10 and more preferably from 1 to 5 mm.

The present invention further provides a process for producing an abrasion-resistant polyurethane coating by mixing (a) polyisocyanate based on aromatic isocyanates having an average functionality of less than 2.5, (b) polymeric compounds having isocyanate-reactive groups, (c) catalysts, comprising trimerization catalyst, optionally (d) chain extenders, and (e) auxiliaries and/or additives to give a reaction mixture, applying the reaction mixture to an article, and curing the reaction mixture to give the polyurethane coating

In this process, the polyisocyanate component (a) used for producing the polyurethane coating, and components (b) to (e) are reacted in amounts such that the isocyanate index is 103 to 200, preferably 110 to 150, and more preferably 120 to 140. Here, a ratio of isocyanate groups to isocyanate-reactive groups of 1 : 1 corresponds to an isocyanate index of 100. The isocyanate index for the purposes of the present invention refers to the stoichiometric ratio of isocyanate groups to isocyanate-reactive groups, multiplied by 100.

The reaction mixture for producing the abrasion-resistant polyurethane coatings of the invention is produced preferably by the one-shot method with the aid of the low-pressure or high-pressure technique. The reaction mixture is then applied to the article that is to be coated. This is done preferably in closed, appropriately heated molds. The molds consist commonly of metal, e.g., aluminum or steel.

The starting components (a) to (e) are mixed for this purpose preferably at a temperature of 15 to 90°C, more preferably of 25 to 55°C, and the reaction mixture is introduced into the mold optionally under elevated pressure. Mixing may be carried out mechanically by means of a stirrer or a stirring screw, or under high pressure in what is called the countercurrent injection process. The mold temperature is appropriately 20 to 160°C, preferably 30 to 120°C, more preferably 30 to 60°C. In the context of the invention, the mixture of components (a) to (e) is termed a reaction mixture at reaction conversions of less than 90%, based on the isocyanate groups.

With particular preference, the process of the invention is a process for producing a steering wheel. In this case, a polyurethane system for producing a polyurethane foam, preferably having a density between 150 to 200 kg/m³, is preferably injected into a mold. This mold appropriately contains a steering wheel skeleton, preferably made of metal, more particularly of injection-cast lightweight metal. Steering wheel skeletons of this kind, and also the polyurethane foams, are common knowledge. Alternatively, the reaction mixture for producing the polyurethane coating of the invention may also be applied to any other support, the support preferably having a surface made of metal or plastic, more particularly of polyurethane. After this foam has been cured, the foaming mold is opened briefly by a small gap, for degassing, is fully closed again after pressure compensation, and, in a further step, the polyurethane reaction mixture for producing the compact polyurethane reaction mixture of the invention is injected, and the low-density foam core is surround-molded completely with this mixture

The polyurethane coatings of the invention can be used, for example, for parts in the automobile interior, such as door linings and door handles, switches or steering wheels. The present invention further provides a steering wheel, preferably an automobile steering wheel, comprising an abrasion-resistant polyurethane coating.

Advantages of the polyurethane coating of the invention are ease of processing, low combustibility, and, in particular, high abrasion resistance, in conjunction with a low level of hardness and a pleasant sensation on contact. It is further possible, especially without using amine-based catalysts, to produce coatings of the invention which have low emissions and hence make only a slight contribution, or none at all, to the odor nuisance in the automobile interior.

The invention is to be illustrated below by means of examples.

### Example1:

A polyisocyanurate coating resistant to abrasion was produced by mixing two components A and B:
- A component: a polyisocyanate prepolymer with an NCO-content of 22.9 % by weight and an average functionality of 2.05, based on monomeric and polymeric MDI and polypropylenglycol.
- B component: 89% parts by weight of polytetrahydrofuran with a number-average molecular weight of 2000 g/mol, 4.75 parts of 1,4-butanediol, 0.5 part of monoethylenglycol, 0.5 part of potassium acetate, 0.25 part of triethylendiamine, 3 parts of a mixture of sodium, potassium and calcium aluminosilicates in castor oil and 2 parts of black pigment.

The A and B components were vigorously mixed in a way such as isocyanate index is 130. The mixture obtained was injected in an open mould with leather like grained surface: grained plates with about 3 mm thickness and a Shore A hardness of 82 were obtained. These plates were tested according to the abrasion resistance test.

Therefore a grained sample is rubbed with a tissue. Prior to testing, the samples are aged for at least 7 days. At least the final 24 hours of storing before testing are performed at 23°C and 50% relative humidity. The test itself is then performed in a conditioned room at 23°C and 50% relative humidity.

For the test itself a skin sample is fixed on a holder to allow a tissue rubbing over its surface. The sample shouldn't be able to move on the holder. The tissue to be used is a 100% cotton web reference 171 R supplied by Tissage de le rue de la Paix, 27 rue de la Paix, 59280 Armentières Cedex, France. The cotton web band is 600 mm long and 35 mm wide. At one extremity of the cotton web band a 1000g (+-10g) mass is hanged. The other extremity is fixed to a mechanism making a back and forth motion which is at the same level as the sample holder so that the tissue is hanging over the sample holder. This ensures that the cotton web band stays horizontal between the mechanism and the sample and vertical between the sample and the mass. The mechanism performs 13 cycles +- 1 cycle per minute while one cycle is a back and forth motion in a sinussodical speed, at amplitude of 140 mm +- 1 mm. Moreover the cotton web bands motion on the sample shouldn't be laterally.

The mechanism is started for 2340 cycles. After these 2340 cycles, the sample is quoted following the below scale (see diagram below):
- Quotation 1: no abrasion
- Quotation 2: low abrasion
- Quotation 3: clear abrasion
- Quotation 4: very intense abrasion
- Quotation 5: total abrasion, the surface grain is totally rubbed off.

A sample is judged as abrasion resistant as soon as the quotation isn't higher than 2 after 2340 cycles of cloth abrasion.

### Example 1 is quoted "low abrasion" after 2340 cycles.

### Example 2:

A polyurethane coating was produced by mixing two components A and B:
- A component: a polyisocyanate prepolymer with an NCO-content of 22.9 % by weight and an average functionality of 2.05, based on monomeric and polymeric MDI and polypropylenglycol.
- B component: 88.7% parts by weight of polytetrahydrofuran with a number-average molecular weight of 2000 g/mol, 6.75 parts of 1,4-butanediol, 0.25 part of triethylendiamine, 4.3 parts of black pigment.

The A and B components were vigorously mixed in a way such as isocyanate index is 103. The mixture obtained was injected in an open mould with leather like grained surface: grained plates with about 3 mm thickness and a Shore A hardness of 81 were obtained. These plates were tested according to the abrasion resistance test.

### Example 2 is quoted "total abrasion" after 360 cycles.

### Example 3:

A mixture was produced by mixing two components A and B:
- A component: a polyisocyanate prepolymer with an NCO-content of 22.9 % by weight and an average functionality of 2.05, based on monomeric and polymeric MDI and polypropylenglycol.
- B component: 90% parts by weight of polytetrahydrofuran with a number-average molecular weight of 2000 g/mol, 4.75 parts of 1,4-butanediol, 0.25 part of triethylendiamine, 3 parts of a mixture of sodium, potassium and calcium aluminosilicates in castor oil and 2 parts of black pigment.

The A and B components were vigorously mixed in a way such as isocyanate index is 130. The mixture obtained was injected in an open mould with leather like grained surface: reaction didn't occur. No samples could be produced in absence of trimerization catalyst.

## Claims

1. A polyurethane coating having a hardness of 50 to 90 Shore A, obtainable by mixing
(a) polyisocyanate based on aromatic or aliphatic isocyanates having an average functionality of 2 to less than 2.5,
(b) polymeric compounds having isocyanate-reactive groups,
(c) catalysts, comprising trimerization catalyst, and optionally
(d) chain extenders, and
(e) auxiliaries and/or additives
to give a reaction mixture, applying the reaction mixture to an article, and curing the reaction mixture to give the polyurethane coating, the polyisocyanate component (a) and the components (b) to (e) being reacted in amounts such that the isocyanate index is 103 to 200.

2. The polyurethane coating according to claim 1, wherein the isocyanate index is 110 to 150.

3. The polyurethane coating according to claim 1 or 2, wherein the average functionality of the isocyanates a) is 1.8 to 2.2.

4. The polyurethane coating according to any of claims 1 to 3, wherein the polyisocyanate (a) is a prepolymer having an NCO content of 5% to 25% by weight of NCO.

5. The polyurethane coating according to claim 4, **characterized in that** the prepolymer has been obtained by reacting monomeric diphenylmethane diisocyanate comprising up to 10% by weight of carbodiimide-, uretdione-, allophanate- and/or uretonimine-modified diphenylmethane diisocyanate and polypropylene oxide having a functionality of 2 to 4.

6. The polyurethane coating according to any of claims 1 to 5, wherein the average functionality of the polymeric compounds having isocyanate-reactive groups, b), is 1.8 to 3.0.

7. The polyurethane coating according to any of claims 1 to 6, wherein the average functionality of the polymeric compound having isocyanate-reactive groups, b), is 1.9 to 2.5 and the average molecular weight of the polymeric compound having isocyanate-reactive groups, b), is 750 to 4000 g/mol.

8. The polyurethane coating according to any of claims 1 to 7, wherein the polymeric compound having isocyanate-reactive groups, b), comprises polytetrahydrofuran.

9. The polyurethane coating according to any of claims 1 to 8, wherein the chain extender d) comprises 1,4-butanediol.

10. The polyurethane coating according to any of claims 1 to 9, wherein the catalyst e) comprises potassium acetate as trimerization catalyst.

11. The polyurethane coating according to any of claims 1 to 10, wherein the polyurethane coating has a thickness of 0.1 to 20 mm.

12. The polyurethane coating according to any of claims 1 to 11, wherein the surface of the polyurethane coating is grained.

13. A process for producing a polyurethane coating by mixing
(a) polyisocyanate based on aromatic isocyanates having an average functionality of less than 2.5,
(b) polymeric compounds having isocyanate-reactive groups,
(c) catalysts, comprising trimerization catalyst, optionally
(d) chain extenders, and
(e) auxiliaries and/or additives
to give a reaction mixture, applying the reaction mixture to an article, and curing the reaction mixture to give the polyurethane coating,

14. A steering wheel comprising a polyurethane coating according to any of claims 1 to 12.
